Europäisches Patentamt

European Patent Office

Office européen des brevets

(19)

(11) Numéro de publication: **0 325 528**
**A1**

## (12) DEMANDE DE BREVET EUROPEEN

(21) Numéro de dépôt: **89400135.3**

(51) Int. Cl.⁴: **F 16 B 5/07**

(22) Date de dépôt: **17.01.89**

(30) Priorité: **18.01.88 FR 8800530**
**12.01.89 FR 8900307**

(43) Date de publication de la demande:
**26.07.89 Bulletin 89/30**

(84) Etats contractants désignés:
**AT BE CH DE ES FR GB GR IT LI LU NL SE**

(71) Demandeur: **CAOUTCHOUC MANUFACTURE ET PLASTIQUES**
**143bis, rue Yves le Coz**
**F-78005 Versailles (FR)**

(72) Inventeur: **Baliu, Louis**
**Champfleury**
**F-51200 Epernay (FR)**

**Bechu, Jean-Pierre**
**Les Poissons 20 Ter, Rue de Bezons**
**F-92400 Courbevoie (FR)**

**Vingrief, Michèle**
**1, Avenue de Porchefontaine**
**F-78000 Versailles (FR)**

(54) Dispositif de jonctionnement de panneaux ou de réalisation de conduits et ses applications.

(57) Dispositif de jonctionnement de panneaux ou de réalisation de conduits, fabriqué à partir d'une composition polymérique souple, caractérisé en ce qu'il se compose d'au moins deux éléments (I) et (J), emboîtables, obtenus à partir d'une bande unique profilée (1) qui comporte, au dessus d'une base (2), une succession de saillies (3), longitudinales, séparées par des évidements (4), le nombre desdites saillies étant au moins égal à deux, l'assemblage en symétrie des éléments (I) et (J) se faisant par emboîtement réciproque des saillies (3) de chaque élément dans les évidements (4) correspondants de l'autre élément, éventuellement verrouillé par une ligne d'agrafes (32), engagées dans une fente (31), ménagée dans l'axe desdites saillies (3).

FIG. 3a

EP 0 325 528 A1

Bundesdruckerei Berlin

## Description

### Dispositif de fonctionnement de panneaux ou de réalisation de conduits et ses applications

L'invention est relative au domaine des travaux publics, du bâtiment et des industries dan lesquelles il est important de réaliser des assemblages étanches de rives de panneaux ou d'éléments et plus particulièrement de panneaux souples ou encore de réaliser simplement des conduits étanches éventuellement démontables.

C'est ainsi, par exemple, que l'invention permettra de réaliser de vastes structures, telles que des revêtements de toitures-terrasse ou des étanchéités de bassins, à partir d'éléments individuels que leur masse et leur taille permettent de manipuler avec les moyens courants ou encore de constituer, à partir de composants, des ensembles que l'on souhaite pouvoir monter et démonter avec facilité.

Pour assembler des éléments en assurant l'étanchéité de la liaison, on connait des moyens proposés pour les revêtements de toiture, tels que le collage par l'intermédiaire d'un ruban adhésif spécial, décrit dans le brevets US 4.601.935 de GENCORP et US 4.588.637 de ROCKCOR ou tels que le soudage de polymères thermofusibles, décrit dans le brevet DE 3.226.447, de HESSMANN, moyens qui présentent l'avantage d'être étanches mais ne sont pas démontables.

Il existe aussi des systèmes mécaniques, également destinés à l'assemblage de revêtements de toiture, tel celui décrit dans le brevet US 4.543.758 de LANE qui comporte un rail s'engageant dans un canal ou ceux qui font l'objet des brevets US 4.519.175 de CARLISLE, US 4.455.804 de SINGLE-PLY et EP 104.810 d'UNIROYAL, du type utilisant un disque ou encore du brevet DE 3.029.465 de BACKMANN.

Ces systèmes - qui peuvent éventuellement être démontables -ne présentent pas de continuité dans la liaison entre les éléments et nécessitent, pour une bonne étanchéité, un recouvrement important des bords de chaque élément, ce qui représente une perte de surface utile.

On connait aussi des dispositifs d'assemblage du type fermeture à glissière mais ils présentent l'inconvénient de mal résister aux contraintes d'utilisation sévère ou de pollution par des grains de sable ou des particules.

Il existe système très répandu, mis au point par la société VELCRO et protégé par différents brevets parmi lesquels WO 86.03.164 WO 85.03.625 et US 4.271.566, du type comportant un grand nombre de boucles et crochets. Ce dispositif a pour inconvénients majeurs sa faible résistance à l'humidité et sa dégradation rapide sous l'effet de contraintes mécaniques, de compression en particulier, les boucles et les crochets ayant tendance à s'écraser et à se détacher les uns des autres.

D'autres techniques, utilisant le procédé d'enclipsage d'une partie mâle dans un logement femelle, sont utilisés, par exemple pour accrocher un film dans un support, comme dans la demande de brevet FR 2.565.301 de MICHEAU, ou comme moyen de fermeture d'une bande transporteuse souple comme dans la demande FR 2.562.520 de AMCO ou encore comme profil à clé incorporée du type décrit dans le brevet français 2.431.644 d'Hutchinson-Mapa.

Ces dispositifs sont tous composés d'un élément mâle possédant un profil différent de celui de l'élément femelle et, par conséquent, nécessitent, pour leur réalisation, des outillages de fabrication distincts pour chacun des éléments - mâle et femelle - du dispositif.

L'invention a pour objectif de proposer un dispositif pour le jonctionnement de panneaux ou pour la création de conduits, permettant, éventuellement, le démontage, le remplacement ou la réutilisation des éléments qu'il relie ou qu'il contient, assurant une parfaite étanchéité et qui soit économique à fabriquer, puisque l'analyse de l'art antérieur montre qu'un tel dispositif n'est pas connu.

L'invention concerne donc un dispositif de jonctionnement de panneaux ou de réalisation de conduits, réalisé dans une composition polymérique souple de formulation adaptée aux contraintes de l'utilisation.

L'invention est caractérisée en ce que le dispositif de jonctionnement de panneaux ou de réalisation de conduits se compose d'au moins deux éléments emboîtables, obtenus à partir d'une bande unique profilée qui comporte, au dessus d'une base, une succession de saillies longitudinales et d'évidements, également longitudinaux, le rayon de courbure des saillies étant égal au rayon de courbure des évidements, l'assemblage, en symétrie, des éléments se faisant par emboîtement réciproque des saillies de l'un des éléments dans les évidements correspondants d'un autre élément.

Le choix d'une composition polymérique souple comme matériau constitutif de la bande unique profilée est dicté par deux impératifs. Le premier, économique, est la facilité de mise en oeuvre des polymères et de leur transformation en produit fini par des techniques simples telles que le moulage ou l'extrusion, couramment utilisées dans l'industrie de transformation des polymères.

Le second, qui présente un caractère technique, est la variété des propriétés que l'on peut obtenir par le choix du polymère de base et l'adaptation de la formulation de la composition polymérique aux contraintes d'utilisation.

Pour réaliser une composition polymérique souple, adaptée à la fabrication de la bande unique profilée, le formulateur pourra choisir le polymère de base parmi la vaste palette des caoutchoucs et élastomères, naturels ou synthétiques, ou encore parmi la gamme des polymères thermoplastiques.

Le formulateur donnera à la composition polymérique souple, le module et la densité adaptés à l'application en ajoutant au polymère de base les charges nécessaires, minérales ou organiques, pulvérulentes ou fibreuses, et il ajoutera la souplesse - élément indispensable à l'enclipsage des saillies dans les évidements correspondants, et au démontage des éléments de la bande unique profilée par désemboîtement des saillies - par l'emploi de plastifiants adéquats.

Pour des application spéciales et, en particulier, pour les usages dans le bâtiment, le formulateur choisira, parmi les polymères de base et/ou les charges minérales ou organiques et les plastifiants, ceux qui sont susceptibles de conférer à la (ou aux) composition (s) polymérique (s) une bonne résistance au feu, par exemple des produits contenant des halogènes.

Il pourra également utiliser des colorants afin de réaliser une bande unique profilée, adaptée à des contingences esthétiques, lorque l'application le nécessitera.

La bande unique profilée longitudinalement peut être avantageusement réalisée, par exemple par extrusion de la composition polymérique, éventuellement suivie d'une vulcanisation si le polymère de base est un élastomère.

Les caractéristiques et les variantes du dispositif de jonctionnement ou de réalisation de conduits, objet de l'invention, seront mieux comprises à la lecture de la description accompagnant les dessins, dans lesquels :

- la figure 1 est une coupe transversale de la bande unique profilée montrant le profil donné aux saillies et aux évidements ;

- la figure 2 illustre quelques variantes des formes que l'on peut donner aux éléments constitutifs de la bande unique profilée, pour en accroître l'efficacité ou la souplesse, selon les applications ;

- la figure 3 schématise la technique d'assemblage en symétrie des éléments de la bande unique profilée pour réaliser, par emboîtement, différents jonctionnements étanches ;

- la figure 4 décrit l'utilisation du dispositif à la réalisation de cavités entre deux éléments à assembler ;

- la figure 5 illustre la possibilité de réaliser des conduits étanches et, éventuellement, démontables ;

- la figure 6 représente la section droite d'un canal comportant un verrouillage ;

- la figure 7 représente une liaison multicanaux entre machines mobiles, comportant un verrouillage ;

- la figure 8 est une vue en perspective de la liaison illustrée en figure 7 ;

- la figure 9 décrit différents moyens de réalisation d'un verrouillage ;

- la figure 10 met en évidence la technique de démontage du dispositif ;

- la figure 11 décrit l'application du dispositif à la fermeture d'une bande transporteuse tubulaire ;

- la figure 12 illustre l'emploi du dispositif à la mise en place d'un vitrage souple sur un capteur solaire ;

- la figure 13 schématise le jonctionnement de deux modules d'un barrage anti-pollution, à l'aide du dispositif.

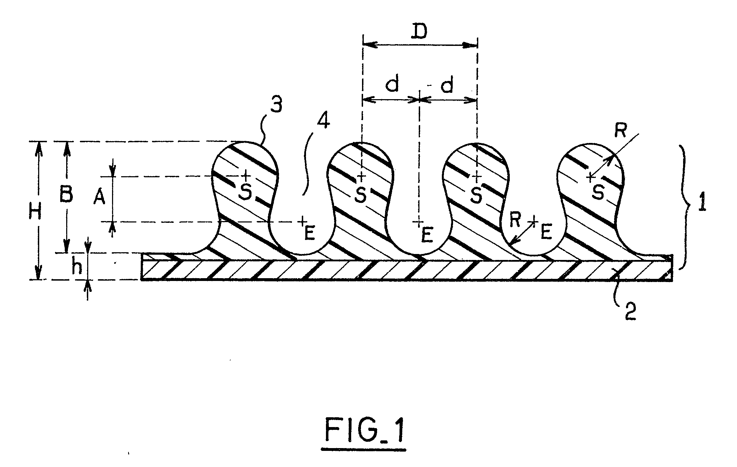

La figure 1 est une vue en coupe transversale de la bande unique profilée (1) constituée d'une base (2), de saillies (3) et d'évidements (4). Les saillies (3) et les évidements (4) possèdent un profil symétrique, le rayon de courbure (R) de la partie arrondie prenant la même valeur dans la saillie (3) et dans l'évidement (4) et la distance (D), séparant les centres (S) des parties arrondies de deux saillies successives (3), étant égale au double de la distance (d) séparant le centre (S) de la partie arrondie d'une saillie (3) du centre (E) de la partie arrondie de l'évidement (4) accolé.

La base (2) a une face extérieure plane destinée à la fixation, par exemple par collage, sur les lés ou les rives des panneaux à assembler.

La bande unique profilée (1) est réalisée, le plus souvent, dans une seule composition polymérique souple qui peut, selon la dureté désirée pour l'application, être homogène ou renforcée de fibres courtes.

Dans les utilisations où les contraintes mécaniques sont sévères, et afin de créer, entre les saillies et l'élément à assembler un gradient de modules, il peut être avantageux de réaliser, comme représenté, la bande unique profilée (1) à partir de deux compositions polymériques souples de formulations différentes, l'une constituant les saillies (3), l'autre la base (2), les techniques moderne d'extrusion permettant la fabrication de tels profilés bi-matière en une seule opération.

La hauteur (h) de la base (2) est, généralement, comprise entre 10 et 20 % de la hauteur totale (H) de la bande unique profilée (1), et la hauteur (A) entre les centres (S) de la partie arrondie de la saillie (3) et (E) de la partie arrondie de l'évidement (4) est égale à la demie distance (B) entre le sommet de la saillie (3) et le fond de l'évidement (4).

La formulation de la composition polymérique souple sera adaptée aux contraintes d'utilisation par le choix de l'élastomère de base, des charges et des plastifiants, de manière à offrir une résistance au feu, aux hydrocarbures ou aux huiles et aux graisses, par exemple, ainsi qu'au vieillissement atmosphérique, tout en présentant la dureté souhaitable.

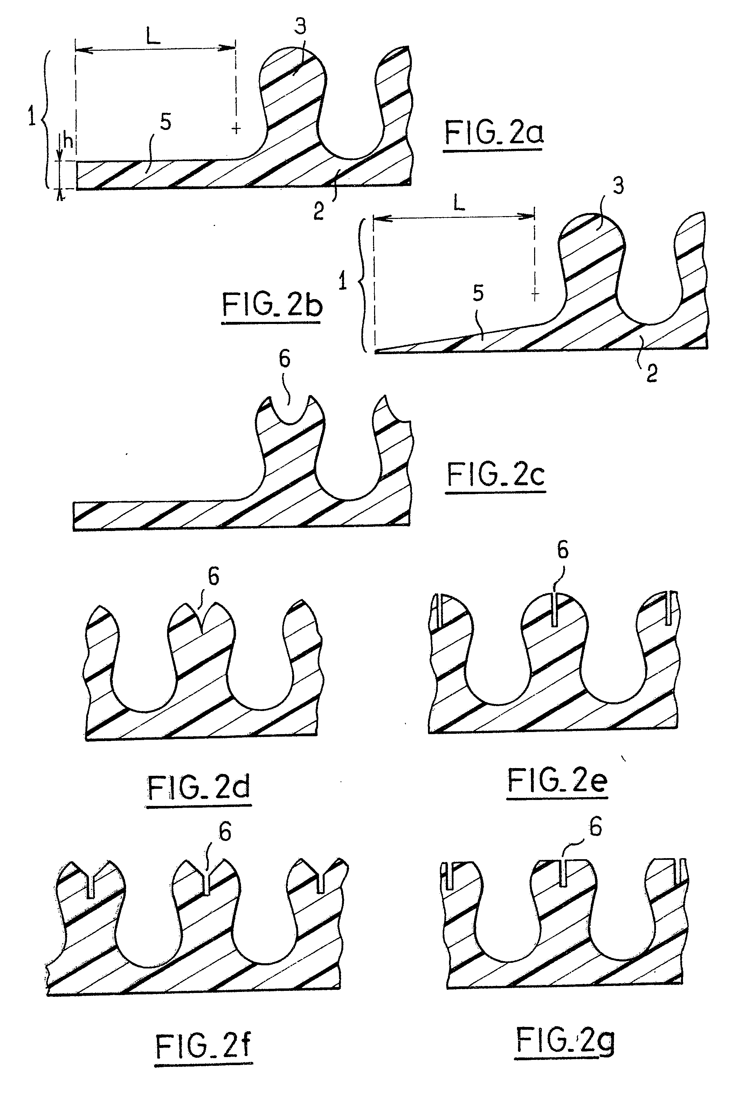

La figure 2 illustre en coupe transversale, à titre d'exemples non limitatifs, quelques variantes des formes que l'on peut donner aux éléments constituants de la bande unique profilée, selon les applications, pour en accroître l'efficacité, la souplesse ou la facilité de montage.

La vue 2a montre une extrémité de la bande unique profilée (1) qui est munie, après la dernière saillie (3) d'un talon (5), prolongeant la base (2) et ici représenté de même hauteur (h) qu'elle et de section transversale rectangulaire. La longueur (L) du talon (5) est évidemment réglée selon les besoins de l'application.

La vue 2b montre une autre configuration que peut prendre le talon (5) d'extrémité de la bande unique profilée (1) qui prolonge la base (2). Afin de réduire les surépaisseurs dans la zone d'assemblage, par exemple, le talon (5) pourra, en effet, présenter une section transversale triangulaire (comme représenté), son épaisseur allant en diminuant sur sa longueur (L) depuis la hauteur (h) de la base (2) au niveau de la dernière saillie (3).

Dans une autre configuration, le talon (5) peut présenter une section transversale trapézoïdale.

Les vues 2c à 2g illustrent différentes formes que peuvent prendre les saillies (3) de la bande unique profilée (1) pour adapter leur souplesse et faciliter leur emboîtement dans les évidements (4).

Dans la vue 2c, le sommet de la saillie (3) comporte une échancrure (6) cylindro-concave.

Dans la vue 2d, le sommet de la saillie (3) comporte une échancrure (6) de forme curviligne.

Dans la vue 2e, l'échancrure (6) de la saillie (3) a la forme d'une fente dans laquelle pourra, éventuellement, venir se loger un coin (non représenté).

La configuration de la vue 2f combine, au sommet de la saillie (3) une ouverture prismatique et une fente pour constituer l'échancrure (6), alors que celle de la vue 2g est l'association d'un plat au sommet de la saillie (3) et d'une fente (6).

La bande unique profilée est constituée d'une série d'au moins deux saillies (3) de formes identiques ou différentes.

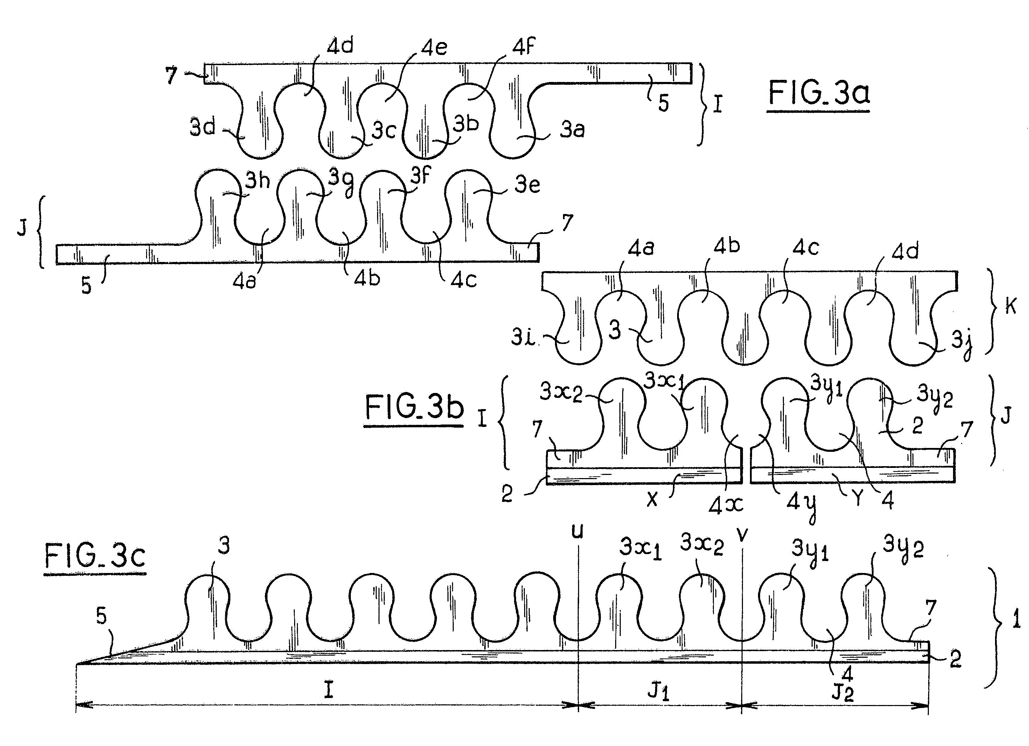

La figure 3 schématise l'assemblage en symétrie de deux éléments de la bande unique profilée pour réaliser, par emboîtement des saillies (3) dans les évidements (4), la liaison étanche entre deux éléments juxtaposés.

La bande unique profilée est découpée en deux parties (I) et (J) qui seront montées, selon les applications, avec les talons (5) du même côté ou en opposition.

Dans l'assemblage illustré sue la vue 3a, où les talons (5) sont montés en opposition, les saillies (3d), (3c) et (3b) de l'élément (I) viennent, respectivement, s'emboîter dans les évidements (4a), (4b) et (4c) de l'élément (J), la saillie (3a) de l'élément (I) venant prendre place au contact de l'extrémité (7) de l'élément (J), ladite extrémité (7) étant démunie de talon dans cette représentation.

De ce fait, symétriquement, les saillies (3e), (3f) et (3g) de l'élément (J) viennent, respectivement, s'emboîter dans les évidements (4f), (4e) et (4d) de l'élément (I), la saillie (3h) de l'élément (J) venant prendre place au contact de l'extrémité (7) de l'élément (I), ladite extrémité (7) étant démunie de talon dans cette représentation.

La vue 3b illustre un autre type de montage, destiné à ne pas alourdir inutilement les lés ou les panneaux (X) et (Y) à assembler, en limitant à deux saillies la largeur utile de la bande unique profilée disposée sur chacune des rives à assembler desdits lés ou panneaux (X) et (Y).

La bande unique profilée à deux saillies peut être obtenue directement par extrusion d'un profilé de composition polymérique souple ayant la forme voulue ou par découpage longitudinal, selon l'axe d'un fond d'évidement, d'une bande unique profilée à 4 saillies, pour créer deux parties (I) et (J) comportant chacune deux saillies (3x1) et (3x2) sur la partie (I) et (3y1) et (3y2) sur la partie (J).

La base (2) de la partie (I) est alors fixée par un moyen mécanique quelconque, tel qu'un collage par exemple, en rive du lé ou du panneau (X), la base (2) de la partie (J) étant fixée sur la lisière correspondante du lé ou du panneau (Y), préférentiellement par le même moyen mécanique.

Les lés ou panneaux (X) et (Y) sont alors rapprochés jusqu'au contact des deux demi-évidements (4x) et (4y).

L'assemblage est opéré à l'aide d'un élément (K) de la bande unique profilée comportant, préférentiellement dans la représentation illustrée, cinq saillies, de façon à ce que les quatre saillies (3x1), (3x2), (3y1) et (3y2) des deux parties (I) et (J), viennent s;emboîter, respectivement, dans les évidements (4a), (4b), (4c) et (4d) de l'élément (K) et que, symétriquement, les saillies (3) de l'élément (K) viennent s'emboîter dans les évidement (4) correspondants des éléments (I) et (J), de manière telle que les saillies (3i) et (3j) viennent au contact des extrémités (7), ici dépourvues de talon, des éléments (I) et (J).

L'élément (K) peut ne pas comporter de talons comme dans la variante illustrée sur la vue 3b, mais il peut également être muni d'au moins un talon à section longitudinale rectangulaire si la surépaisseur en extrémité de raccordement n'a pas d'importance ou d'au moins un talon de section longitudinale triangulaire ou trapézoïdale afin de limiter la surépaisseur en extrémité de raccordement.

La vue 3c schématise la manière de réaliser le jonctionnement de la vue 3b à partir d'une bande unique profilée (1) comportant neuf saillies (3), donc huit évidements (4), une extrémité sans talon (7) et une extrémité munie d'un talon de section transversale triangulaire (5).

Dans la bande unique profilée (1) sont pratiquées deux découpes longitudinales selon les axes en fonds d'évidements suivant les lignes (U) et (V) ce qui permet de constituer deux éléments identiques (I) et (J) comportant chacun deux saillies, respectivement d'une part (3x1) et (3x2) et, d'autre part (3y1) et (3y2) , et de constituer aussi un élément (K), comportant le talon (5) de section transversale triangulaire et cinq saillies (3).

Un tel dispositif est avantageusement utilisé pour le jonctionnement des panneaux souples destinés à la couverture des toitures en terrasse ou à la réalisation de liners de bassins ou de retenues d'eau.

Il présente l'avantage d'être démontable pour permettre le remplacement d'un lé, en case de déchirure, par exemple.

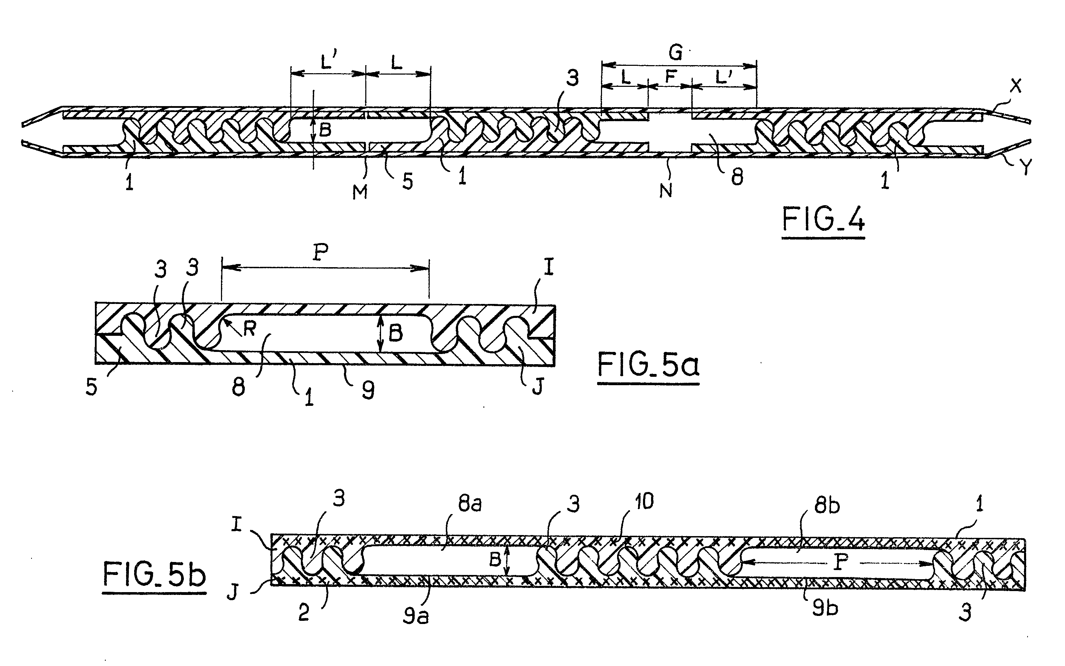

Mais l'utilisation du dispositif réalisé à partir d'une bande unique profilée n'est pas limitée au jonctionnement étanche des lisières de panneaux. Une application intéressante, illustrée sur la figure 4, consiste à créer des cavités entre deux pièces à assembler.

Cette configuration est obtenue en fixant la bande unique profilée (1) sur les pièces (X) et (Y) de manière telle, qu'après montage, ladite bande unique profilée (1) se trouve placée à l'intérieur de l'ensemble des pièces (X) et (Y). Les parois de pièces à assembler (X) et (Y) se trouvent alors écartées l'une de l'autre de la hauteur correspondante à celle de deux éléments emboîtés du dispositif d'assemblage ; les talons (5) de deux éléments successifs de la bande unique profilée (1) délimitant une cavité (8), dont le volume est fonction de la hauteur (B) des saillies (3) de la bande unique profilée (1), d'une part, et soit des longueurs (L) et (L') de deux talons successifs (5), si les éléments de la bande unique profilée sont jointifs comme illustré dans la zone (M), soit de la longueur (G) égale à la somme des longueurs (L) et (L') de deux talons successifs (5) augmentée de l'écartement (F) entre lesdits talons, si les éléments de la bande unique profilée (1) ne sont pas jointifs, comme illustré dans la zone (N).

L'étanchéité longitudinale étant assurée par l'emboîtement des saillies (3) dans les évidements correspondants, les cavités (8) peuvent être fermées aux extrémités, soit par un simple bouchon, soit par un système de raccord qui, relié à une source de fluide, permet de créer un circuit de liquide ou de gaz.

L'exemple illustré permet, par utilisation de six éléments de bande unique profilée (1), pour assurer la liaison de deux feuilles de matériaux souples (X) et (Y), de créer deux cavités (8), de section transversale approximativement rectangulaire, dont les parois sont constituées par les flancs des saillies (3) de l'un ou l'autre des éléments de la bande unique profilée, d'une part, et, soit par les talons (5) de deux ensembles d'éléments successifs, comme illustré dans la zone (M) où les éléments successifs sont accolés, soit par une partie des feuilles de matériaux souples (X) et (Y) entre les talons (5) de deux ensembles d'éléments successifs, comme illustré dans la zone (N) où les éléments successifs ne sont pas jointifs.

De ce fait, les cavités (8) ont pour largeur la hauteur (B) des saillies (3) et pour longueur, soit - dans la zone (M) - la somme des longueurs (L) et (L'), identiques ou différentes, des talons (5), soit - dans la zone (N) - la distance (G), précédemment définie.

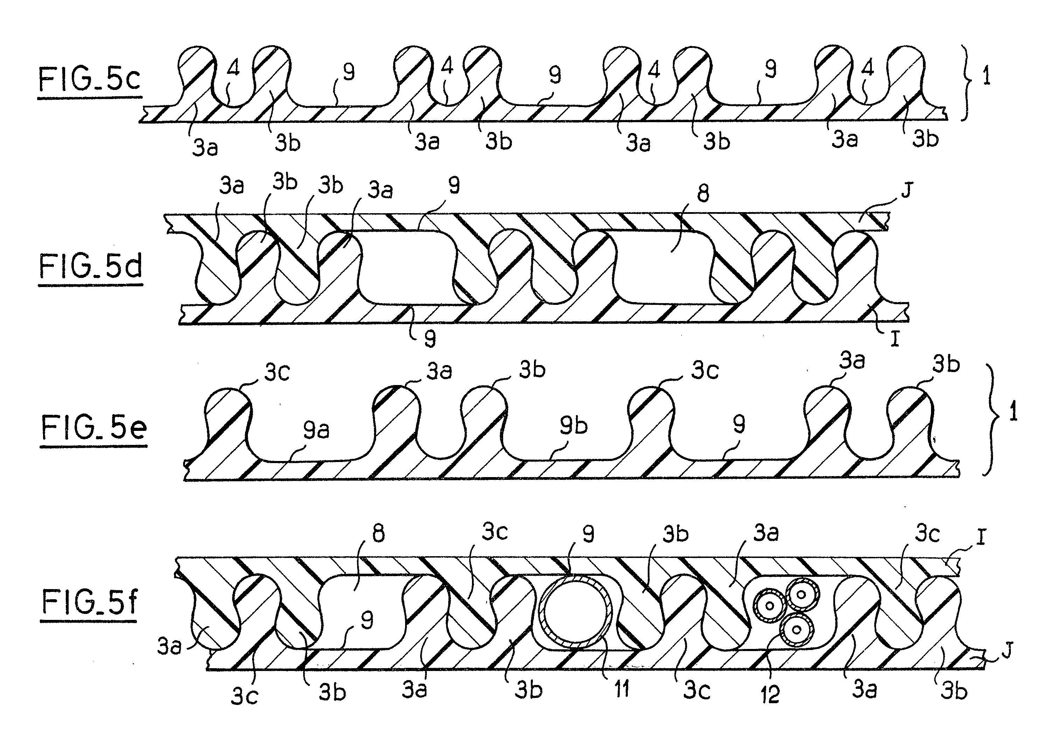

D'une manière similaire, il est possible d'utiliser la bande unique profilée (1), non plus pour créer des cavités au sein de pièces à jonctionner, mais pour réaliser, à partir de deux éléments de ladite bande unique profilée (1), ayant même profil et montés en symétrie, un conduit présentant un canal unique ou des canaux multiples de section transversale approximativement rectangulaire, comme le montre la figure 5.

La vue 5a représente la réalisation d'un conduit à canal unique (8), à partir de deux éléments identiques (I) et (J) d'une bande profilée (1) qui présente un profil particulier dans lequel une zone plane (9), médiane, est située entre deux groupes latéraux d'au moins deux saillies (3) chacun, dont les bords des saillies les plus internes délimitent la zone plane (9).

Le canal (8) du conduit est déterminé par l'espace laissé vide entre les zones planes (9) après emboîtement des saillies (3) de chacun des éléments (I) et (J) dans les évidements correspondants de l'autre élément.

La zone plane (9) étant délimitée par la plus interne des saillies latérales (3), il est bien évident qu'elle présente à ses extrémités un rayon de courbure (R) égal à celui des saillies (3) ou des évidements.

Chaque extrémité de chacun des éléments (I) et (J) de la bande unique profilée (1) peut se terminer, comme représenté, par un talon (5) dont l'épaisseur sera égale à la hauteur de la base augmentée de la moitié de la hauteur (B) d'une saillie (3).

La section transversale du canal (8) est donc définie par la hauteur (B) des saillies (3) et par la longueur (P) de la zone plane (9) de la bande unique profilée (1).

La vue 5b illustre la réalisation d'un conduit à deux canaux (8a) et (8b), ici représentés de sections transversales identiques mais qui pourraient être de sections transversales différentes, réalisation effectuée à partir de deux éléments identiques (I) et (J), découpés dans un bande unique profilée (1) présentant un profil particulier.

Ladite bande unique profilée (1) est dans cette application, constituée de deux zones planes (9a) et (9b), disposées entre deux groupes latéraux, comportant au moins deux saillies (3), situés à chaque extrémité et d'un groupe central, comportant également au moins deux saillies (3) - et ici représenté avec cinq saillies (3) -, chacun des canaux (8a) et (8b) étant déterminé par l'espace laissé vide entre les faces planes (9a) ou (9b) après emboîtement des saillies (3) de l'un des éléments (I) ou (J) dans les évidements correspondants de l'autre élément.

Il est bien évident pour l'homme de l'art que le nombre des canaux réalisés dans un même conduit n'est pas limité à deux, comme illustré, mais peut être étendu à un plus grand nombre en donnant à la bande unique profilée (1) le profil adéquat.

Avantageusement, afin que les zones planes (9) présentent une bonne résistance mécanique, la base (2) de la bande unique profilée (1) sera renforcée d'une armature (10), constituée de fils, de câbles, ou de tissus textiles ou métalliques.

Les vues 5c à 5f illustrent deux autres manières de réaliser des conduits à canaux multiples à partir de deux éléments identiques d'une bande unique profilée (1).

Dans la vue 5c, la bande unique profilée (1) est constituée de groupes d'au moins deux saillies successives (3a) et (3b) et d'un évidement (4), lesdits groupes étant séparés par des zones planes (9).

Comme illustré sur la vue 5d, après emboîtement de la saillie (3b) de l'élément (I) dans l'évidement correspondant de l'élément (J), la saillie (3a) de l'élément (I) vient prendre place à une extrémité de la zone plane (9). La cloison entre deux canaux successifs (8) est alors composée de quatre saillies, appartenant alternativement à chaque élément (I) et (J), c'est à dire, par exemple (3a) de l'élément (J), (3b) de l'élément (I), (3b) de l'élément (J), et (3a) de l'élément (I).

La section transversale de chacun des canaux (8) est définie, dans cette disposition, par l'espace compris entre deux saillies (3a) successives, l'une appartenant à l'élément (I), l'autre à l'élément (J).

Dans la vue 5e, qui illustre une variante, la bande unique profilée (1) est constituée par la répétition d'un motif constitué d'une zone plane (9a) située entre une saillie unique (3c) et un groupe de deux saillies (3a) et (3b), lui-même suivi d'une autre zone plane (9b).

Après assemblage de deux éléments identiques (I) et (J), les cloisons des canaux (8) sont constituées, comme le montre la vue 5f de trois saillies, (3a) appartenant à l'élément (I), (3c) appartenant à l'élément (J) et (3b) appartenant à l'élément (I) d'une part et (3a) appartenant à l'élément (J), (3c) appartenant à l'élément (I) et (3b) appartenant à l'élément (J), d'autre part.

Il est bien évident pour l'homme de l'art que les bandes uniques profilées (1), décrites sur les vues 5a, 5c et 5e, peuvent, lorsque l'application le demande, comporter, dans leur base, une armature interne du type décrit sur la vue 5b.

Les cavités ou les canaux (8) des figures 4 et 5 peuvent être emplies d'air ou d'un autre gaz si l'on recherche un effet pneumatique, comme, par exemple pour la réalisation de matelas pneumatiques. Lesdites cavités peuvent également contenir, de façon étanche, un liquide et servir ainsi de conduites étanches à canal simple ou à canaux multiples.

Les cavités ou canaux (8) permettent, également, le passage de tuyaux (11), par exemple pour le raccordement de circuits de fluide entre deux véhicules successifs ferroviaires ou routiers, ou pour la création d'un circuit de commande de logique fluidique sur machine. Il est également possible d'y insérer des câbles électriques (12), ce qui en permet une utilisation en atmosphère dangereuse, corrosive ou explosive, puisqu'ils sont protégés par la gaine ainsi constituée.

Les conduits ou les jonctionnements de panneaux ainsi réalisés par association de deux éléments identiques d'une bande unique profilée présentent l'avantage d'être démontables, ce qui permet la séparation ou le remplacement d'une partie de l'assemblage ou d'un composant qui y est contenu.

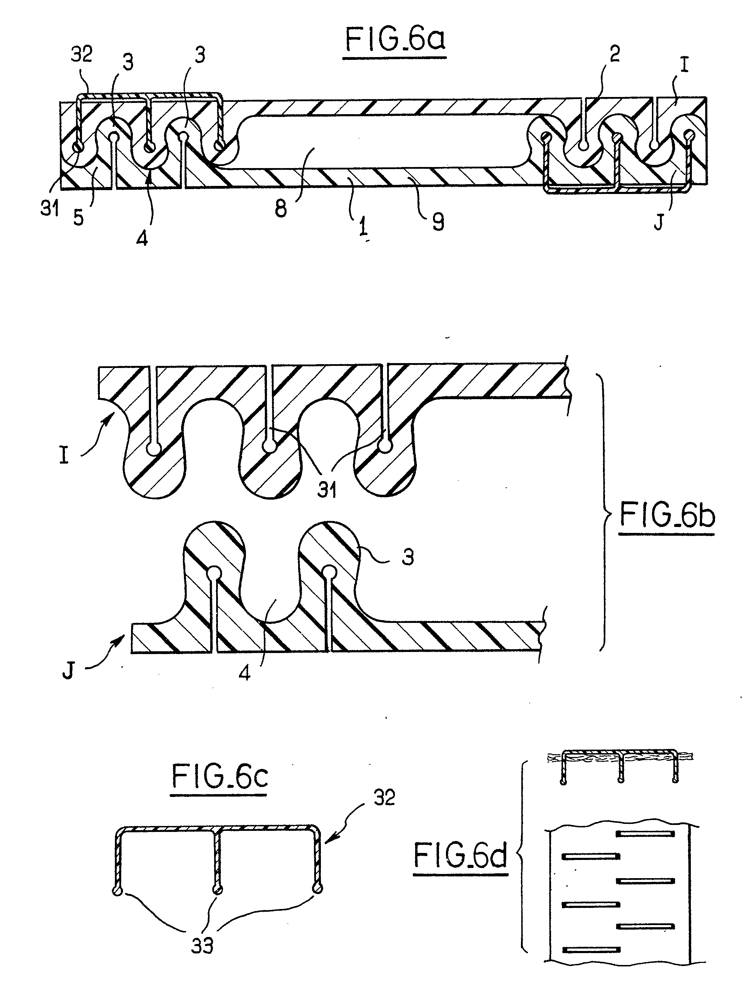

La figure 6 est une section droite du conduit souple constitué , par l'assemblage face à face de deux profilés (I) et (J) identiques, mais inversés de façon que, de chaque côté d'un conduit (8) constitué par les parois (9) prolongeant leur talon (2), au moins deux saillies (3) du profilé (I) s'engagent dans deux rainures (4) du profilé (J) et réciproquement.

La vue 6a représente l'ensemble, après assemblage, la vue 6b avant la solidarisation par le moyen mécanique approprié.

Une fente (31) à légère dépouille inversée, c'est-a-dire se resserrant de l'intérieur vers la face externe, est ménagée au dos de chaque profilé.

Une pièce formant agrafe (32) vient engager la tête (33) de chacun de ses bras, ici représentés au nombre de trois, par un profil conjugué dans chacune de ses fentes.

L'agrafe (32) représentée dans la vue 6c peut être constituée d'un profilé de section constante et assez souple car réalisé par boudinage d'un matériau thermoplastique ou bien d'un élastomère renforcé de fibres courtes (vue 6c). Elle peut, au contraire, être constituée de courtes longueurs (inférieures à la largeur de la section) d'un tel profilé tranché, reliées entre elles par une bande de tissu adhésif ou quelques fils textiles en nappe collés au dos desdites agrafes de courte longueur. Elle peut également être formée de pièces métalliques à base de fils de section carrée ou de courte sections de tôle, assemblées par sertissage sur une bande de tissu textile ou une nappe formée de quelques fils textiles, comme représenté sur la une 6d.

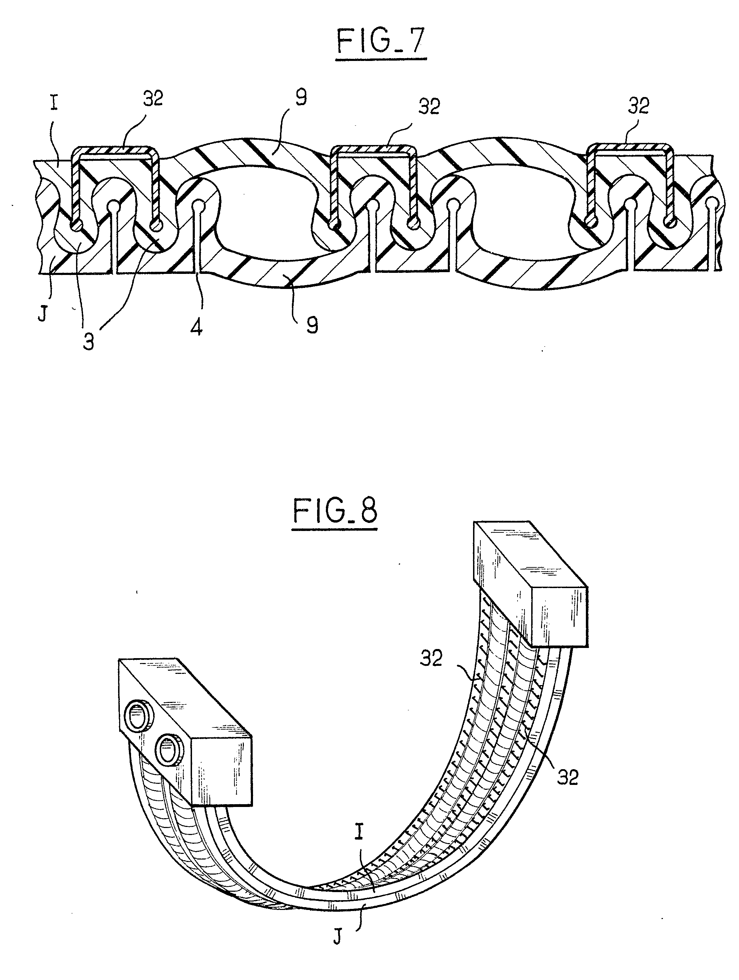

La figure 7 représente une nappe multicanaux formée par la juxtaposition de plusieurs éléments identiques à ceux de la figure 6. Ils sont représentés dans la position gonflées sous l'effet d'une pression interne non négligeable. Le verrouillage par les agrafes (32) qui empêchent les saillies (3) des profilés (I) et (J) de basculer avec variation de leur écartement a pour effet de maintenir, d'une part, la liaison mécanique entre les deux éléments, d'autre part, l'étanchéité entre ceux-ci, malgré la tension exercée sur les talons (5) par le gonflement des parois (9). Le démontage toujours aisé de l'ensemble multicanaux, par exemple serti mécaniquement sur des embouts appropriés à chacune des extrêmités des profilés (I) et (J), se fait après enlèvement des verrous constitués par les agrafes (32), éventuellement sur un seul côté pour une modification, par exemple l'échange des câbles protégés à l'intérieur de l'un des conduits formés par ce profilé.

La figure 8 montre en perspective une utilisation de la liaison multicanaux plate représentée par la section de la figure 7. Un usage fréquent sur des machines mobiles ou par exemple entre véhicules attelés, aussi bien sur route que sur fer a une forme de chaînette comme représenté, par un élément pendant librement entre deux embouts de fixation et de communication.

Le procédé d'assemblage mécanique entre profilés, ainsi que leur verrouillage par les agrafes (32), ne restreint pas la possibilité de courbure de chaque élément, avec microglissements entre eux, dans le sens de la chaînette représentée, sans que soit limitée l'étanchéité assurée par le contact entre au moins quatre surfaces des saillies (3) imbriquées deux à deux dans le face à face des profilés (I) et (J) dont la résitance à la courbure est faible avant assemblage et reste modérée après l'assemblage. La courbure de l'ensemble, permise par une coupe à longueur différente avant le sertissage des embouts, peut être modifiée aisément tandis que se produit une friction entre éléments qui serait relativement amortissante, dans le cas par exemple de la liaison entre deux véhicules ou d'un chariot mobile sur une machine-outil.

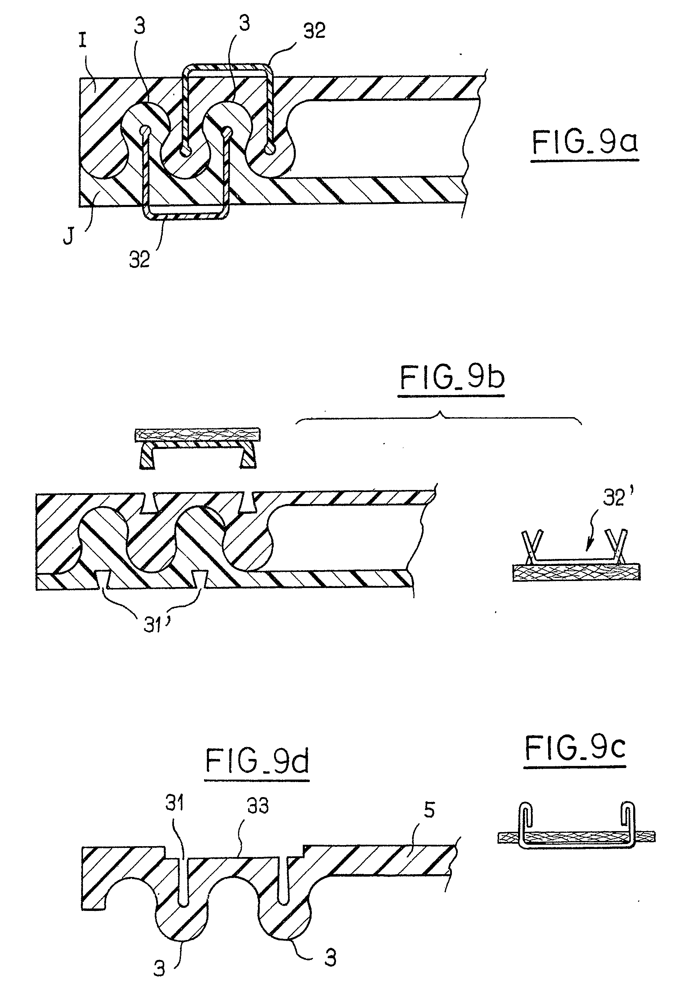

La figure 9 représente plusieurs réalisations matérielles du verrouillage par des agrafes (32). La vue 9a montre que deux verrouillages sont possibles, chacun sur une face de l'assemblage formé de profilés (I) et (J) face à face.

Néammoins le parallèlisme imposé par le verrouillage de deux saillies contigues (3) enfermant la tête de leur vis à vis suffit à maintenir l'étanchéité et la solidarisation des canaux ainsi constitués et une seule ligne d'agrafage reste suffisante. Chacun des profilés (I) et (J), pour des raisons de fabrication unique, porte sur la face opposée aux saillies (3) les fentes (31) ménagées dès le boudinage, et, facultativement, une dépression (33) représentée sur la vue 9d, destinée à encastrer les agrafes (32) dans l'épaisseur du talon, (5) pour des raisons esthétiques ou de protection contre poussières ou accumulation de boue.

La solution dont la réalisation est représentée par la vue 9a utilise des profilés identiques pour les composants antagonistes (I) et (J) comportant de profondes fentes (31) à légère dépouille inversée comme décrit en figure 1 qui procurent au profilé une grande flexibilité et facilitent l'assemblage avant la pose des agrafes (32) aussi bien que le démontage après la dépose de ces dernières. Mais leur section très découpée exige pour un maintien mécanique et une éventuelle étanchéité la présence d'une ligne d'agrafes (32) sur le dos de chacun des profilés (I) et (J).

Une variante est représentée par la vue 9b où les saillies (3) conservent leur raideur propre grâce à une faible profondeur des rainures (31'), avec des agrafes (32') de faible hauteur par rapport à leur largeur (ou entraxe des saillies), ce qui n'affaiblit pas la partie la plus étroite de ces saillies (3). Pour un bon maintien de celle-ci, une dépouille notable est nécessaire, conférant aux rainures (31') une allure trapézoïdale que le procédé de fabrication par boudinage n'exclut pas. Les agrafes (32') devront avoir une section correspondante, que permet un double pliage comme représenté en vue 9c, ou bien des formes alternativement trop ouvertes et trop fermées qui sont montrées en vue 9b.

La vue 9d montre une variante facultative permettant d'encastrer au niveau de la face extérieure du talon (J), grâce à une dépression (33), l'alignement d'agrafes (32) de façon qu'elles ne dépassent pas géométriquement du profilé, soit sur une face (I), soit sur les deux faces (I) et (J).

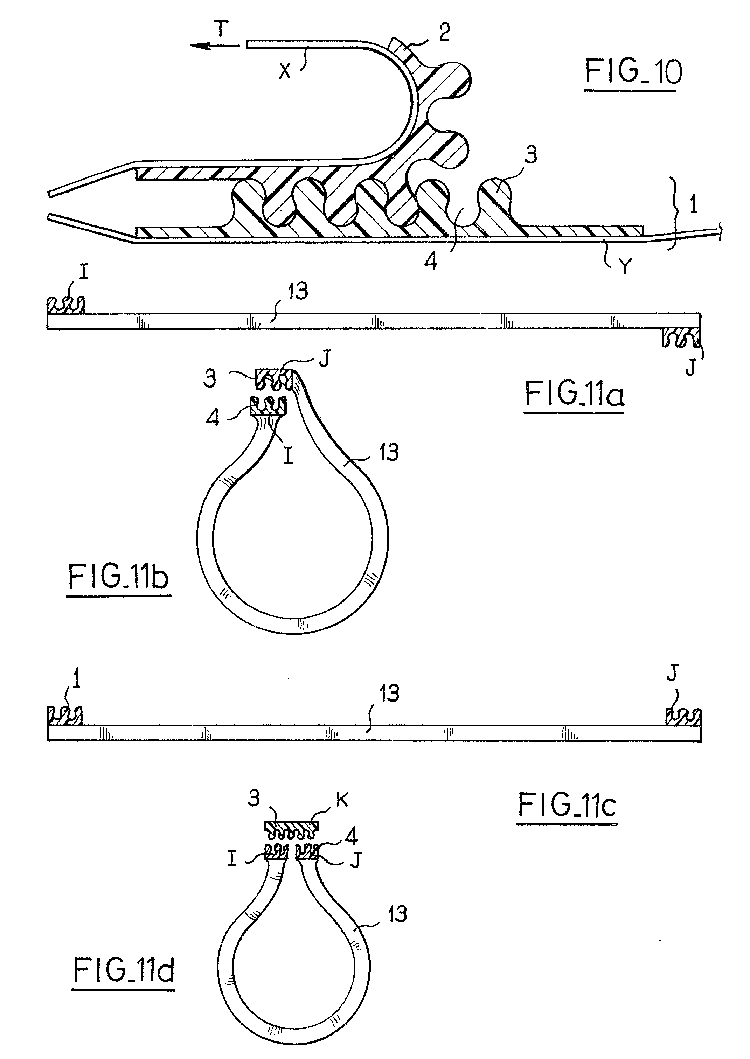

La figure 10 met en évidence la technique de démontage du dispositif.

Grâce à la souplesse de la composition polymérique qui constitue la bande unique profilée (1), il a été possible, pour réaliser l'assemblage des deux éléments, d'emboîter les saillies (3) de l'un des éléments dans les évidements (4), correspondants, de l'autre élément.

Pour démonter cet assemblage, - éventuellement après avoir retiré le dispositif de verrouillage (32) - il suffit d'exercer, directement sur la base (2) de la bande unique profilée (1) ou sur l'une des rives des panneaux assemblés (X), un effort de traction (T), transversalement à la bande unique profilée (1). La souplesse de ladite bande unique profilée (1) permet alors le désengagement progressif des saillies (3) de l'un des éléments hors des évidements (4), correspondants, de l'autre élément.

Il serait procédé de la même manière pour l'ouverture d'une cavité ou du canal d'un conduit réalisé à partir de deux éléments d'une bande unique profilée.

Si, dans de nombreux cas, il est avantageux de pouvoir démonter le dispositif d'assemblage ou de réalisation de conduits, objet de l'invention, certaines applications peuvent, au contraire, nécessiter une liaison intime entre les deux éléments assemblés de la bande unique profilée, liaison complémentaire au seul emboîtement ou à l'éventuel verrouillage mécanique.

Le dispositif est alors rendu indémontable par interposition d'un adhésif - constitué par une couche de colle, une dissolution de la composition polymérique dans un solvant approprié ou un film plastique fusible compatible avec la composition polymérique constituant la bande unique profilée - entre les saillies de l'un des éléments et les évidements correspondants de l'autre élément - , ce qui a, en outre, pour avantages de renforcer l'étanchéité et de limiter le nombre de saillies nécessaires à la solidité de l'assemblage aux extrémités.

Outre les emplois déjà cités, tels l'assemblage de panneaux souples pour constituer des liners de bassins ou des couvertures de toitures en terrasse ou la réalisation de conduits à canal simple ou à canaux multiples pour circuits de fluides, pour la protection de câbles électriques ou pour la création de systèmes pneumatiques, le dispositif d'éléments emboîtables réalisé à partir d'une bande unique profilée trouve de multiples applications dans des industries aussi variées que la manutention et les transports, le bâtiment, les vêtements, l'énergie, ou la protection des sites.

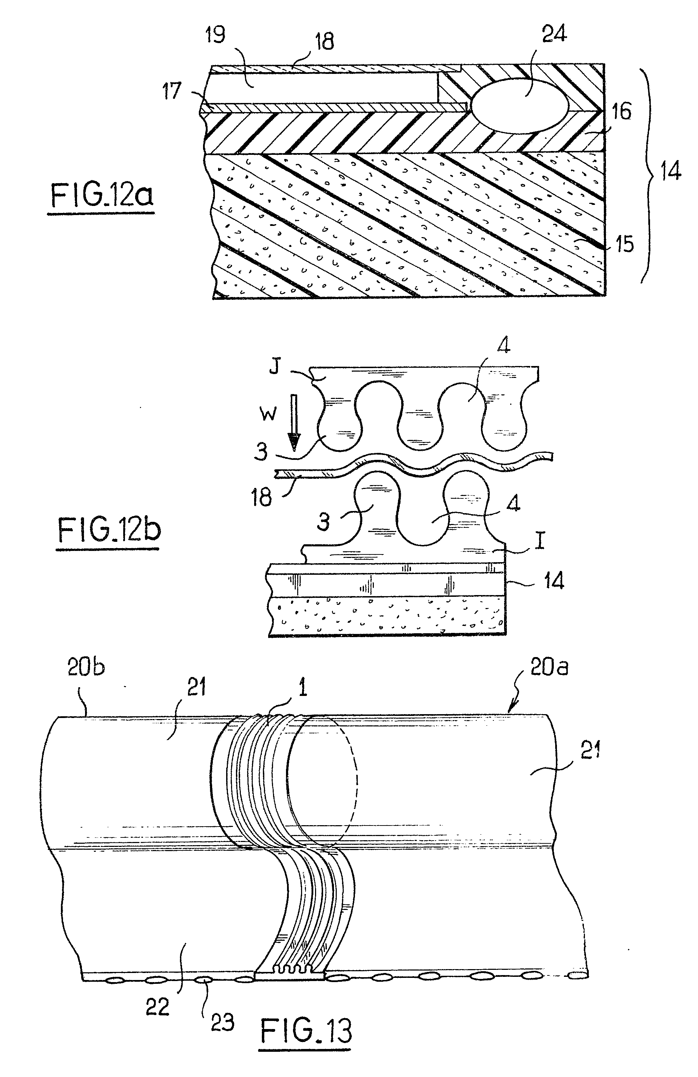

A titre d'exemples non limitatifs, on peut citer, dans le domaine de la manutention, la pose de tasseaux ou de bords -qui peuvent être ou non amovibles - sur les bandes transporteuses, la réalisation d'élévatrices à double bande par association de profilés disposés sur les bords de deux bandes parallèles, ou la fermeture de bandes transporteuses souples, en tuyau, comme illustré sur la figure 11.

La figure 11 montre, en effet, deux possibilités de fermeture d'une bande transporteuse pour une manutention sous forme tubulaire.

La vue 11a illustre le montage de deux éléments (I) et (J) de la bande unique profilée, l'un fixé longitudinalement sur un des bords de la face supérieure de la bande transporteuse plane (13), l'autre fixé sur le borde opposé de la face inférieure de ladite bande transporteuse (13).

La vue 11b illustre, schématiquement, la mise en forme de la bande transporteuse (13) dont la fermeture est assurée par l'emboîtement des saillies (3) chacun des éléments (I) ou (J) dans les évidements correspondants (4) de l'autre élément.

La vue 11c montre une autre possibilité de montage des éléments (I) et (J) sur la bande transporteuse plane (13) pour la même application de manutention tubulaire.

Dans cette disposition, chacun des éléments (I) et (J) est monté sur un bord opposé de la même face de la bande transporteuse (13).

La vue 11d illustre, schématiquement, la mise en forme de la bande transporteuse (13) dont la fermeture est assurée par un troisième élément de bande unique profilée (K), dont les saillies (3) viennent s'emboîter dans les évidements correspondants (4) des éléments (I) et (J).

La fermeture sous forme tubulaire des bandes transporteuses selon l'une ou l'autre des dispositions décrites sur les vues 11b et 11d permet d'éviter l'emploi des câbles et des dispositifs mécaniques complexes qui assurent habituellement cette fonction de fermeture.

Parmi les autres applications dans le domaine de la manutention, il est avantageux d'utiliser le dispositif pour la mise en place de feuilles anti-abrasion sur des parois de camions ou de tout autre matériel, ou pour le revêtement de goulottes, l'étanchéité du montage par les deux éléments empêchant la pénétration des poussières et la facilité de démontage permettant le remplacement aisé desdites feuilles lorsqu'elles sont usées.

Afin d'assurer une bonne protection du matériel, il est avantageux de disposer les éléments de la bande unique profilée - après un éventuel verrouillage mécanique - dans les feuilles anti-abrasion ou les revêtements de goulotte, de manière telle que le profilé soit noyé dans l'épaisseur de la feuille ou du revêtement.

Dans la domaine du vêtement, le dispositif permet la fermeture des chaussures de sport, des protège-tibias ou des jambières pour chevaux, par exemple, empêchant, grâce à son étanchéité, la pénétration des cailloux, de l'eau ou de la neige. Il peut également être utilisé pour la fermeture des vêtements de plongée sous-marine pour lesquels il offre, outre l'étanchéité, une insensibilité, à l'eau inconnue dans les solutions antérieures.

Dans le bâtiment, le dispositif, utilisé dans sa fonction de réalisation de conduit, permet, d'une manière simple, la création de gaines pour fils électriques, par exemple, que l'on peut poser comme des plinthes au bas des murs à équiper.

Dans le domaine des équipement destinés à l'énergie, comme les capteurs solaires, le dispositif, objet de l'invention, permet la pose d'un vitrage souple sur l'échangeur de base, comme illustré sur la figure 12.

La vue 12a schématise la constitution d'un capteur solaire (14) composé d'une isolation thermique (15), placée sous une base (16), d'une couche thermoconductrice (17), de canaux de circulation du fluide caloporteur (24) et d'un vitrage souple (18) qui délimite avec la couche thermoconductrice (17) et les parois contenant les canaux (24) une chambre close (19) provoquant un effet de serre.

La vue 12b représente une possibilité de montage du vitrage souple (18) sur la paroi de l'échangeur solaire en utilisant le dispositif objet de l'invention.

Un élément (I) de la bande unique profilée, comprenant deux saillies (3), est fixé par un moyen mécanique quelconque sur une extrémité du capteur solaire (14). Le vitrage souple (18), ici constitué d'un film polymérique fin, est placé au dessus. Il suffit d'emboîter, en appliquant une force (W), un deuxième élément (J), ici représenté avec trois saillies (3), de manière telle que les saillies de l'élément (J) pénètrent, en entraînant le vitrage souple (18) dans les évidements correspondants (4) de l'élément (I), les saillies (3) de l'élément (I) pénétrant, réciproquement, en entraînant le vitrage souple (18) dans les évidements correspondants (4) de l'élément (J).

Ce dispositif de fixation du vitrage souple, pour constituer la chambre close à effet de serre du capteur solaire, a pour avantage d'être démontable et de permettre le remplacement aisé du vitrage souple lorsqu'il est sali, rayé ou déchiré.

Le dispositif objet de l'invention permet également l'association en parallèle, de plusieurs capteur modulaires, selon la technique décrite sur la vue 3b.

Le dispositif objet de l'invention est également utilisable pour le montage de profilés antichocs, munis à leur base d'un élément de bande unique profilée, sur des cloisons ou des ouvrages à protéger, munis d'un autre élément de bande unique profilée.

Dans le domaine des loisirs, le dispositif objet de l'invention est utilisé au montage amovible des bandes de billards, munies à leur partie inférieure d'un élément de bande unique profilée, sur la table de jeu dont les parois seront équipées d'un élément identique.

Pour la protection des sites, le dispositif objet de l'invention permettra le jonctionnement de barrages anti-pollution, modulaires, comme l'illustre la figure 13.

Deux modules (20a) et (20b) de barrage anti-pollution souple, comportant une partie cylindrique ou boudin (21), une jupe flexible (22) et une chaîne (23) sont associés, à l'aide du dispositif de jonctionnement dont chacun des deux éléments de la bande unique profilée (1) est fixé à une extrémité des modules (20a) et (20b).

Le jonctionnement de deux modules (20a) et (20b) prend, dans cette application, la forme d'un point d'interrogation, ladite forme étant permise par la souplesse de la bande unique profilée (1) réalisée en composition polymérique.

Le dispositif de jonctionnement de panneaux ou de réalisation de conduits objet de l'invention est, le plus généralement, réalisé de manière simple par extrusion, dans une extrudeuse ayant une filière du profil convenable, d'une composition polymérique de formulation appropriée. Si le polymère de base est un élastomère, l'extrusion est suivie d'une vulcanisation, éventuellement réalisée en continu, qui combine l'effet de la température et de la pression pour donner à la bande unique profilée sa forme définitive.

L'opération de vulcanisation n'est pas nécessaire si le polymère de base est une matière thermoplastique souple, le refroidissement en sortie d'extrudeuse suffisant à conférer à la bande unique profilée sa forme définitive.

Une autre méthode de réalisation consiste en un moulage sous pression, de la composition polymérique, dans un moule fermé présentant l'empreinte adéquate. Cette technique a pour inconvénient de limiter les dimensions de la bande unique profilée aux dimensions du moule, au plus de quelques mètres, contrairement à la technique d'extrusion qui permet des fabrication de très grande longueur, mais offre l'avantage d'une meilleure qualité de surface.

Le dispositif de jonctionnement de panneaux ou de réalisation de conduits, objet de l'invention, présente les avantages suivants:
- il est économique puisque fabriqué, en une bande unique profilée, sans nécessiter d'investissement particulier autre qu'un moule ou une filière d'extrudeuse, sur le matériel utilisé de manière courante dans l'industrie de transformation de polymères,
- il réduit les stocks, ce qui représente un autre facteur d'économie, puisqu'il est issu d'une bande unique profilée et ne nécessite donc pas le stockage d'éléments mâles et d'éléments femelles,
- il ne nécessite, pour son emploi, aucune qualification particulière de la main d'oeuvre,
- il assure une étanchéité parfaite dans la zone d'assemblage par sa forme à autoserrage sous l'effet de la pression.
- il accepte un verrouillage mécanique, optionnel, par exemples réalisé par agrafes, ce qui permet son utilisation sous une pression de fluide modérée.
- il permet, par nature, le démontage des panneaux ou des conduits ainsi réalisés, même lorsqu'est utilisé un verrouillage mécanique - ce qui permet le remplacement des composants endommagés, par le déroulage dans le sens transversal,
- mais il peut être rendu indémontable par liaison adhésive de ses éléments constitutifs, ou l'incorporation d'un raidisseur empêchant la flexion transversale.

Sans sortir du cadre de l'invention, l'homme de l'art pourra apporter diverses modifications au dispositif d'assemblage ou de réalisation de conduits, objet de l'invention, ainsi qu'à ses applications dont la liste ne peut être exhaustive et qui ne sont citées qu'à titre d'exemples non limitatifs.

## Revendications

1°) Dispositif de jonctionnement de panneaux ou de réalisation de conduits, fabriqué à partir d'une composition polymérique souple, caractérisé en ce qu'il se compose d'au moins deux éléments (I) et (J), emboîtables, obtenus à partir d'une bande unique profilée (1) qui comporte, au dessus d'une base (2), une succession de saillies (3), longitudinales, séparées par des évidements (4), le nombre desdites saillies étant au moins égal à deux, et le rayon de courbure (R) des saillies (3) étant égal au rayon de courbure des évidements (4), l'assemblage en symétrie des éléments (I) et (J) se faisant par emboîtement réciproque des saillies (3) de chaque élément dans les évidements (4) correspondants de l'autre élément.

2°) Dispositif de jonctionnement de panneaux ou de réalisation de conduits selon la revendication 1, caractérisé en ce que les saillies (3) de la bande unique profilée (1) présentent à leur sommet une échancrure (6).

3°) Dispositif de jonctionnement de panneaux ou de réalisation de conduits selon l'une des revendications 1 ou 2, caractérisé en ce que la bande unique profilée (1) comporte au moins un talon (5).

4°) Dispositif de jonctionnement de panneaux ou de réalisation de conduits selon la revendication 3, caractérisé en ce que le talon (5) de la bande unique profilée (1) a une section transversale rectangulaire.

5°) Dispositif de jonctionnement de panneaux ou de réalisation de conduits selon la revendication 3, caractérisé en ce que le talon (5) de la bande unique profilée (1) a une section transversale triangulaire.

6°) Dispositif de jonctionnement de panneaux ou de réalisation de conduits selon la revendication 3, caractérisé en ce que le talon (5) de la bande unique profilée (1) a une section transversale trapézoïdale.

7°) Dispositif de jonctionnement de panneaux ou de réalisation de conduits selon l'une des revendications 1 à 6, caractérisé en ce que la base (2) de la bande unique profilée (1) est réalisée dans une composition polymérique de formulation différente de celle constituant les saillies (3).

8°) Dispositif de jonctionnement de panneaux ou de réalisation de conduits selon l'une des revendication 1 à 7, caractérisé en ce que la base (2) de la bande unique profilée (1) comporte un renforcement constitué de fils, de câbles ou de tissus textiles ou métalliques.

9°) Couverture étanche de toiture en terrasse constituée d'au moins deux panneaux souples dont le jonctionnement est assuré par un dispositif conforme à l'un des revendications 1 à 8.

10°) Liner de bassin constitué d'au moins deux lés souples dont le jonctionnement est assuré par un dispositif conforme à l'une des revendications 1 à 8.

11°) Bande transporteuse souple capable de prendre une forme tubulaire, caractérisée en ce que sa fermeture est assurée par un dispositif conforme à l'une des revendication 1 à 8.

12°) Barrage antipollution constitué d'éléments modulaires, caractérisé en ce que le jonctionnement de deux modules successifs (20a) et (20b) est assuré par un dispositif conforme à l'une des revendications 1 à 8.

13°) Conduit à canal unique (8) caractérisé en ce qu'il est réalisé par l'assemblage en symétrie de deux éléments (I) et (J) d'une bande unique profilés (1) conforme à l'une des revendications 1 à 8.

14°) Conduit à canaux multiples (8) caractérisé en ce qu'il est réalisé par l'assemblage en symétrie de deux éléments (I) et (J) d'une bande unique profilée (1) comportant au moins deux zones planes (9) séparant des saillies (3), conformément à l'une des revendications 1 à 8.

15°) Gaine de protection de câbles électriques caractérisée en ce que lesdits câbles électriques (12) sont disposés à l'intérieur de conduits (8) à canal unique ou à canaux multiples conformes à l'une des revendications 13 ou 14.

16°) Système de raccordement de circuits pneumatiques ou fluidiques caractérisé en ce que les tuyaux (11) desdits circuits sont disposés à l'intérieur de conduits (8) à canal unique ou à canaux multiples conformes à l'une des revendications 13 ou 14.

17°) Conduit, gaine ou système de raccordement de tuyaux, selon l'une des revendications 13 a 16, caractérisé en ce qu'au moins deux saillies (3) comportent, dans leur axe, une fente (31), ménagée du côté de la base (1) où une ligne d'agrafes (32) vient verrouiller, après l'assemblage, la déformabilité qui a permis de réaliser ledit assemblage.

18°) Eléments de protection tels que chaussures, protége tibia, jambière pour cheval ou combinaison de sport, caractérisés en ce que leur fermeture étanche est assurée par un dispositif conforme à l'une des revendications 1 à 8.

19°) Capteur d'énergie solaire (14) modulaire, caractérisé en ce que le jonctionnement en parallèle de deux modules est assuré par un dispositif conforme à l'une des revendications 1 à 8.

20°) capteur d'énergie solaire (14), caractérisé en ce que la fixation d'un vitrage souple (18) sur la base pour constituer une chambre close (19) à effet de serre est assurée par l'emprisonnement dudit vitrage souple entre deux éléments (I) et (J) de la bande unique profilée conforme à l'un des revendications 1 à 8.

21°) Feuille ou revêtement de protection anti-abrasion de matériel ou de garnissage de goulottes, caractérisé en ce que ses lisières comportent, noyés dans leur épaisseur, deux éléments réalisés à partir d'une bande unique profilée conforme à l'une des revendications 1 à 8, pour assurer leur montage sur le matériel auquel sont fixés des profilés identiques.

FIG_1

EP 0 325 528 A1

FIG. 2a

FIG. 2b

FIG. 2c

FIG. 2d

FIG. 2e

FIG. 2f

FIG. 2g

EP 0 325 528 A1

4d 4e 4f

7

5 } I

## FIG.3a

3d 3c 3b 3a

3h 3g 3f 3e

J {

7

5 4a 4b 4c

4a 4b 4c 4d

} K

3i 3 3j

## FIG.3b  I {

3x2 3x1 3y1 3y2

7 2 7 } J

2 X 4x 4y Y 4

## FIG.3c

3 u 3x1 3x2 v 3y1 3y2

5 7 } 1

2

4

I J1 J2

FIG_4

FIG_5a

FIG_5b

EP 0 325 528 A1

FIG.5c

4  9  4  9  4  9  4  } 1

3a  3b  3a  3b  3a  3b  3a  3b

FIG.5d

3a  3b  3b  3a  9  8  J

9  I

FIG.5e

3c  3a  3b  3c  3a  3b

9a  9b  9  } 1

FIG.5f

8  3c  9  3b  3a  3c  I

3a

9

9

3c  3b  3a  3b  11  3c  12  3a  3b  J

EP 0 325 528 A1

## FIG.6a

## FIG.6b

## FIG.6c

## FIG.6d

## FIG_7

## FIG_8

FIG. 9a

FIG. 9b

FIG. 9d

FIG. 9c

FIG_10

FIG.11a

FIG.11b

FIG.11c

FIG_11d

FIG.12a

FIG.12b

FIG.13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-U-7 516 421 (RENFTLE) <br> * figures 1,3,18; page III, lignes 30-37 * | 1 | F 16 B 5/07 |
| A | | 2-5 | |
| X | EP-A-0 250 002 (N. MARQUET & CIE.) <br> * figure 1; abrégé * | 1 | |
| A | FR-A-2 264 209 (ERAM) <br> * revendications 1-3,12; figure 4 * | 1,7 | |
| A | DE-A-1 915 098 (H. GOSLAR) <br> * page 3, lignes 8-26; revendications; figure B * | 1,7,8, 10 | |
| A | DE-A-2 547 637 (NAUMANN) <br> * revendication 1 * | 9 | |
| D,A | FR-A-2 562 520 (AMCO) <br> * revendication 1; figures * | 1,11 | |
| A | DE-A-1 807 993 (MECANO SIMMONDS) <br> * page 5, lignes 12-20; revendication 1; figure 6 * | 1,11 | DOMAINES TECHNIQUES RECHERCHES (Int. Cl.4) |
| A | EP-A-0 108 024 (BAT TARAFLEX) <br> * abrégé; figure 1; revendication 1 * | 12 | F 16 B 5/00 <br> F 16 B 2/00 <br> F 16 L 59/00 <br> F 16 L 58/00 <br> F 16 L 3/00 |
| A | DE-B-1 181 511 (LOEOEF) <br> * figures * | 1,13,15 | E 02 B 15/00 <br> F 24 J 2/00 |
| A | DE-U-1 865 759 (PLUMMER) <br> * figures 3,4 * | 13,15 | |
| A | US-A-3 517 702 (MUELLER et al.) <br> * figure 2 * <br> --- -/- | 13,15 | |

Le présent rapport a été établi pour toutes les revendications

| Lieu de la recherche | Date d'achèvement de la recherche | Examinateur |
|---|---|---|
| BERLIN | 20-03-1989 | SCHAEFFLER C.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)

Office européen
des brevets

# RAPPORT DE RECHERCHE EUROPEENNE

Numero de la demande

EP  89 40 0135

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-1 604 016  (UNI-THERM HEATING & PLUMBING)<br>* figure 2 *<br>--- | 13,16 | |
| A | FR-A-2 433 701  (HAPPER SYSTEMS)<br>* revendication 1; figure 6 *<br>--- | 14,16 | |
| A | DE-C-  809 866  (GISSAS)<br>* revendication 2; figures 3-6 *<br>--- | 18 | |
| A | EP-A-0 006 393  (PHENOL ENGINEERING)<br>* page 5, lignes 12-20; figure 3 *<br>--- | 19 | |
| A | GB-A-2 075 086  (FERRANTI)<br>* figures 2-4 *<br>----- | 20 | |

DOMAINES TECHNIQUES
RECHERCHES (Int. Cl.4)

Le présent rapport a été établi pour toutes les revendications

| Lieu de la recherche | Date d'achèvement de la recherche | Examinateur |
|---|---|---|
| BERLIN | 20-03-1989 | SCHAEFFLER C.A.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..........................................................................................
& : membre de la même famille, document correspondant

EPO FORM 1503 03.82 (P0402)